(19) Europäisches Patentamt
European Patent Office
Office européen des brevets

(11) EP 3 046 972 B1

(12) **EUROPEAN PATENT SPECIFICATION**

(45) Date of publication and mention of the grant of the patent:
**01.03.2017 Bulletin 2017/09**

(21) Application number: **14765947.8**

(22) Date of filing: **12.09.2014**

(51) Int Cl.:
***C09B 69/10*** *(2006.01)* ***C11D 3/42*** *(2006.01)*

(86) International application number:
**PCT/EP2014/069564**

(87) International publication number:
**WO 2015/039976 (26.03.2015 Gazette 2015/12)**

(54) **DYE POLYMER**

FARBSTOFFPOLYMER

POLYMÈRE DE COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2013 EP 13184721**

(43) Date of publication of application:
**27.07.2016 Bulletin 2016/30**

(73) Proprietors:
- **Unilever PLC**
  **London EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
  **Wirral**
  **Merseyside CH63 3JW (GB)**
- **BIRD, Jayne, Michelle**
  **Wirral**
  **Merseyside CH63 3JW (GB)**
- **DEVINE, Karen, Maria**
  **Wirral**
  **Merseyside CH63 3JW (GB)**

(74) Representative: **Brooijmans, Rob Josephina Wilhelmus**
**Unilever Patent Group**
**Olivier van Noortlaan 120**
**3133 AT Vlaardingen (NL)**

(56) References cited:
**WO-A1-99/01530**
**WO-A1-2011/047987**
**WO-A1-2012/119859**
**WO-A2-2009/060059**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 046 972 B1

**Description**

## FIELD OF INVENTION

The present invention concerns dye polymers and the use of the dye polymers in laundry compositions.

## BACKGROUND OF THE INVENTION

WO2011/047987 discloses a reactive dye covalently bound to polyethyleneimine polymers for use in laundry detergent formulations to whiten fabric.

WO2012/119859 discloses a dye polymer comprising a core polyamine of which from 60 to 100 mol % of the primary and secondary amines of the core polyamine are alkoxylated and from 0.1 to 30 mol % of the primary and secondary amines of the core polyamine are covalently bound to a reactive dye.

US5565145 discloses alkoxylated ethylene imine polymers without dyes present; the alkoxylated ethylene imine polymers are disclosed as soil dispersing agents.

There is a need to improve the deposition of reactive dyes covalently bound to polyethyleneimines to fabrics under domestic laundry conditions.

## SUMMARY OF THE INVENTION

We have found that the dye polymers of the present invention exhibit improved deposition to textiles.

In one aspect the present invention provides a dye polymer, most preferably a blue or violet dye polymer, comprising a polyethylene imine covalently bound to a reactive dye, the polyethylene imine having from 7 to 1000000, preferably 7 to 50 000, more preferably from 10 to 200, most preferably from 15 to 45, amine nitrogen atoms, wherein from 20 to 95 mol%, most preferably 57 to 80 mol%, of the totality of the protons of the primary and secondary amine nitrogen atoms of the unsubstituted polyethylene imine are substituted by iso-propyl alcohol groups and from 3 to 15 mol % of the protons of the primary and secondary amine nitrogens have been replaced by a polyalkoxyl chain selected from: ethoxy; and, propoxy, wherein the polyalkoxyl chain has from 3 to 50 repeating alkoxyl monomer units.

In an another aspect the present invention provides a laundry composition comprising from 0.001 to 2.0 wt%, preferably 0.05 to 0.2 wt%, of the dye polymer and from 2 to 70 wt% of surfactant.

In a further aspect the present invention provides a domestic method of treating a laundry textile, the method comprising the steps of:

treating a textile with an aqueous solution of the dye polymer as defined in any one of claims 1 to 10, the aqueous solution comprising from 10 ppb to 5000 ppm, preferably 50ppb to 2ppm, of the dye polymer; and, from 0.0 g/L to 6 g/L, preferably 0.2 to 4g/L, of a surfactant; and,

optionally rinsing and drying the textile.

In an even further aspect the present invention provides a dye polymer obtainable by reacting a polyethylene imine with propylene oxide followed by reaction with a reactive dye followed by addition of a polyalkoxyl chain selected from: ethoxy; and, propoxy, wherein the polyalkoxyl chain has from 3 to 50 repeating alkoxyl monomer units.

In an even further aspect the present invention provides a dye polymer obtainable by reacting a polyethylene imine with a reactive dye followed by reaction with propylene oxide followed by addition of a polyalkoxyl chain selected from: ethoxy; and, propoxy, wherein the polyalkoxyl chain has from 3 to 50 repeating alkoxyl monomer units.

In an even further aspect the present invention provides a dye polymer obtainable by addition of a polyalkoxyl chain selected from: ethoxy; and, propoxy, wherein the polyalkoxyl chain has from 3 to 50 repeating alkoxyl monomer units to a polyethylene imine followed by reaction with a reactive dye followed by reaction with propylene oxide.

## DETAILED DESCRIPTION OF THE INVENTION

### Dye

The reactive dye is preferably blue or violet. Deposition of blue or violet dyes enhances the whiteness of white fabrics.

Many Reactive dyes are listed in the Colour Index (Society of Dyers and Colourists/American Association of Textile Chemists and Colorists). Reactive dyes are discussed in Industrial Dyes (edited by K. Hunger).

The reactive dye comprises a chromophore covalently linked to one or more reactive groups. The reactive

group reacts with an NH or OH group, preferably an NH of the polymer to covalently bind the dye to the dye polymer. The amine is far more nucleophilic than the hydroxyl group and will preferentially react with the reactive dye. For example, for an $NH_2$ group as illustrated below:

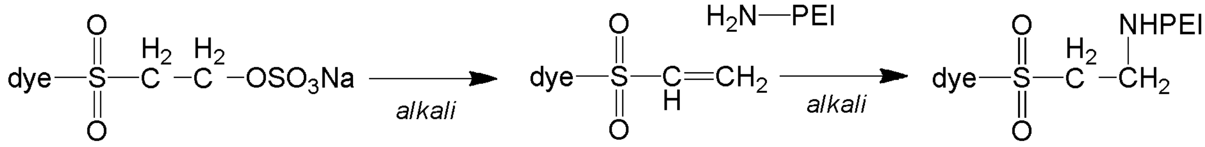


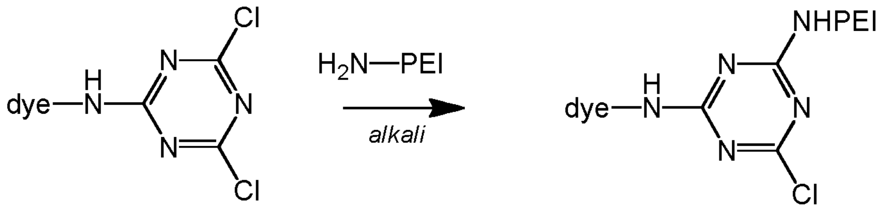


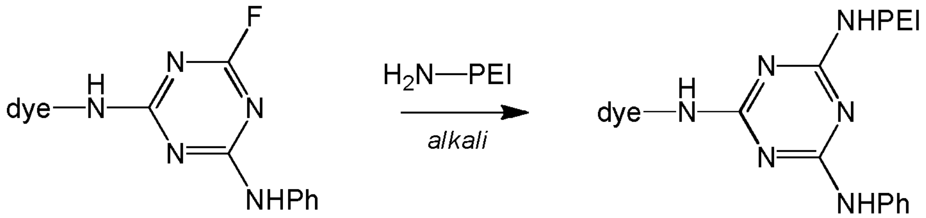


Chromophores may be selected from anthraquinone, phenazine, triphenodioxazine, mono-azo, bis-azo, polyazo, formazan and phthalocyanin.

The reactive group is preferably selected from heterocyclic reactive groups; 2-bromoprop-2-enamido; 2,3-dibromopropanamido; and, a sulfooxyethylsulfonyl reactive group ($-SO_2CH_2CH_2OSO_3Na$).

2-bromoprop-2-enamido reactive group has the structure:

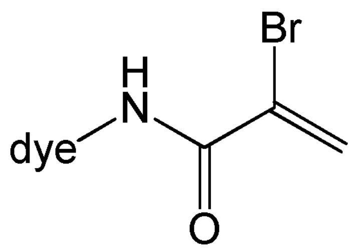

2,3-dibromopropanamido reactive group has the structure:

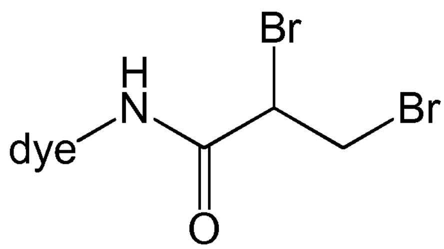

The heterocyclic reactive groups are preferably nitrogen containing aromatic rings bound to a halogen or an ammonium group, which react with $NH_2$ or NH groups of the polymers to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difluorotriazine, monochlorotriazinyl, and trichloropyrimidine.

The reactive group may be linked to the dye chromophore via an alkyl spacer for example: dye-NH-$CH_2CH_2$-reactive group.

Especially preferred heterocylic reactive groups are:

; 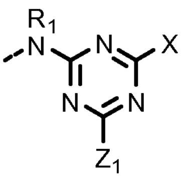 ; 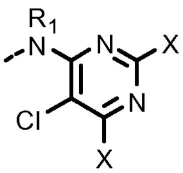 ; 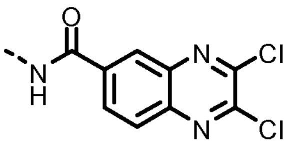 ; and, 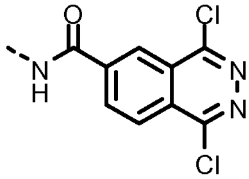 ,

wherein $R_1$ is selected from H or alkyl, preferably H.
X is selected from F or Cl.
When X = Cl, $Z_1$ is selected from -Cl, -$NR_2R_3$, -$OR_2$, -$SO_3Na$
When X = F, $Z_1$ is selected from -$NR_2R_3$
$R_2$ and $R_3$ are independently selected from H, alkyl and aryl groups. Aryl groups are preferably phenyl and are preferably substituted by -$SO_3Na$ or -$SO_2CH_2CH_2OSO_3Na$. Alkyl groups are preferably methyl or ethyl.

Preferred examples of reactive dyes are:

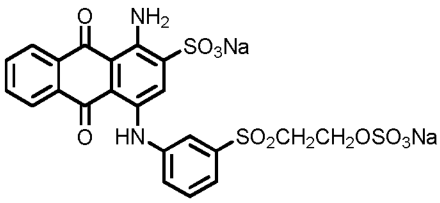 ; 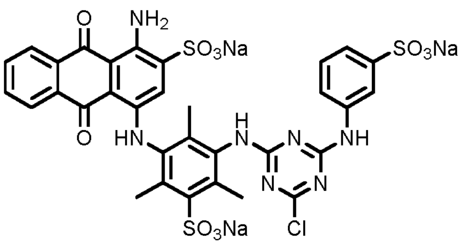 ;

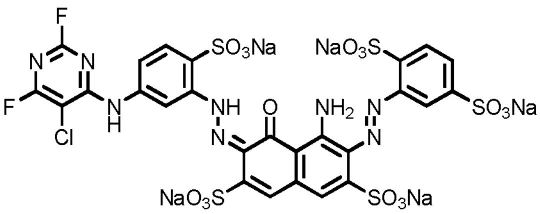 ; 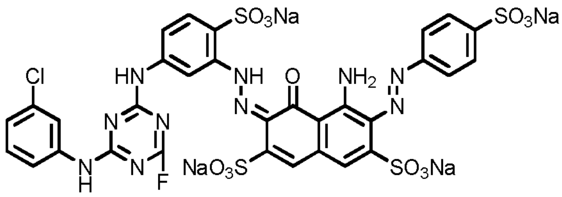 ;

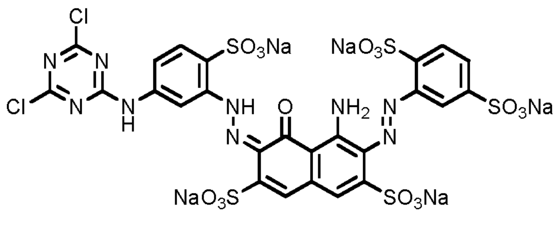 ;

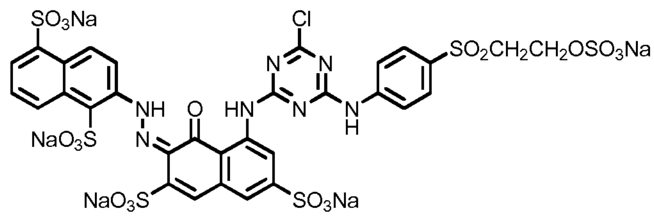

;

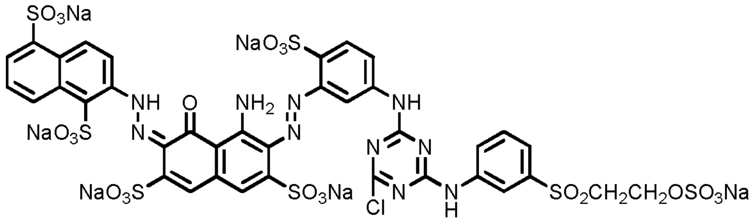

;

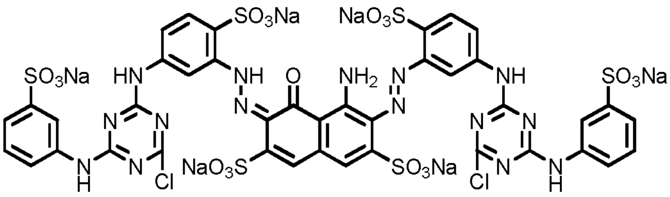

;

and,

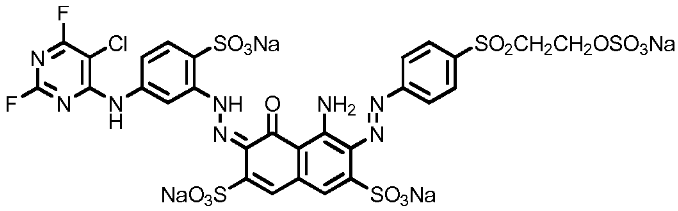

The reactive dye is preferably selected from mono-azo, bis-azo and anthraquinone dyes, most preferably anthraquinone dyes.

The reactive anthraquinone dye comprises an anthraquinone dye covalently linked to a reactive group. The reactive group reacts with an NH of the polymer to covalently bind the dye to the polymer.

A preferred anthraquinone dye is

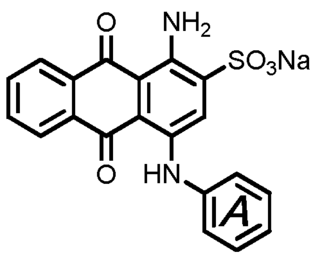

Where the A ring is substituted by a reactive group. preferably the A ring is substituted by a reactive group selected from: dichlorotriazinyl; difluorochloropyrimidine; monofluorotrazinyl; monofluorochlorotrazinyl; dichloroquinoxaline; difluorotriazine; monochlorotriazinyl; trichloropyrimidine 2-bromoprop-2-enamido; 2,3-dibromopropanamido; and, a sulfooxyethylsulfonyl reactive group ($-SO_2CH_2CH_2OSO_3Na$).

The A ring may be further substituted by organic groups preferably selected from alkyl and $SO_3Na$. The alkyl group is preferably C1-C8- alkyl, most preferably methyl.

Preferred reactive anthraquinone dyes are: Reactive blue 1; Reactive blue 2; Reactive blue 4; Reactive blue 5; Reactive blue 6; Reactive blue 12; Reactive blue 16; reactive blue 19; Reactive blue 24 ; Reactive blue 27; Reactive blue 29; Reactive blue 36; Reactive blue 44; Reactive blue 46 ; Reactive blue 47; reactive blue 49; Reactive blue 50; Reactive blue 53; Reactive blue 55; Reactive blue 61; Reactive blue 66; Reactive blue 68; Reactive blue 69; Reactive blue 74; Reactive blue 86; Reactive blue 93; Reactive blue 94; Reactive blue101; Reactive blue103; Reactive blue114; Reactive blue117; Reactive blue125; Reactive blue141; Reactive blue142; Reactive blue 145; Reactive blue 149; Reactive blue 155; Reactive blue 164; Reactive blue 166; Reactive blue 177; Reactive blue 181; Reactive blue 185; Reactive blue 188; Reactive blue 189; Reactive blue 206; Reactive blue 208; Reactive blue 246; Reactive blue 247; Reactive blue 258; Reactive blue 261; Reactive blue 262; Reactive blue 263; Reactive blue 172; Reactive Violet 22; Reactive Violet 31; and, Reactive Violet 34.

The dyes are listed according to Colour Index (Society of Dyers and Colourists/American Association of Textile Chemists and Colorists) classification.

**Reactive Red dye**

A Reactive Red dye may also be bound to the polymer preferably in a mol ratio of 1:100 to 1:4 with the anthraquinone reactive dye. This provides a more violet red shade to the polymer. The Reactive Red dye is preferably a mono-azo dye.

**PEI polymer**

Polyethyleneimines (PEI) are formed by ring opening polymerisation of ethyleneimine.

PEI's are usually highly branched polyamines characterized by the empirical formula $(C_2H_5N)_n$ with a molecular mass of 43.07 (as repeating units). They are commercially prepared by acid-catalyzed ring opening of ethyleneimine, also known as aziridine. (The latter, ethyleneimine, is prepared through the sulphuric acid esterification of ethanolamine).

All polyethylene imine (PEIs) of the present invention contain primary and secondary amines. Preferably tertiary amines are present in the PEI.

All polyethylene imine (PEIs) of the present invention contain primary, secondary and tertiary amines.

The Nitrogen of the dye-polymer may be further substituted by other groups, for example an alkyl group, or an alkyl sulphate group, or an alkyl aryl group or an alkyl aryl sulphate group.

Each polyalkoxyl chain is built from ethoxy and/or propoxy groups. Most preferably it is a polyethoxyl chain. Preferably the polyalkoxyl chain contains 3 to 50 alkoxyl repeat units, more preferably 8 to 20, most preferably 10 to 14. Chains may be OH or alkyl capped, preferably methyl capped. To facilitate the bonding of the capped polyalkoxyl chain with the PEI the chain is preferably provided with a reactive group at the end to be linked to the PEI. Suitable reactive groups may be selected from epoxides, alkenes, a sulfooxyethylsulfonyl reactive group ($-SO_2CH_2CH_2OSO_3Na$), heterocyclic reactive groups and leaving groups such as tosylate. The heterocyclic reactive groups are preferably nitrogen containing aromatic rings bound to a halogen or an ammonium group, which react with $NH_2$ or NH groups to form a covalent bond. To avoid cross-linking reactions preferably the preformed alkoxy chain contains only 1 reactive group, the other chain end is typically alkyl capped.

**Dye-Polymer**

The unsubstituted polyethylene imine is the polyethylene imine before reaction with the reactive dye or propoxylation or addition of the polyalkoxy chain.

It is evident from the present disclosure that propoxylation of the polyethylene imine provides $-CH_2-CH(OH)-CH_3$ substituent such that the unsubstituted polyethylene imine is substituted by iso-propyl alcohol groups.

An example synthesis of the dye-polymer is shown below:

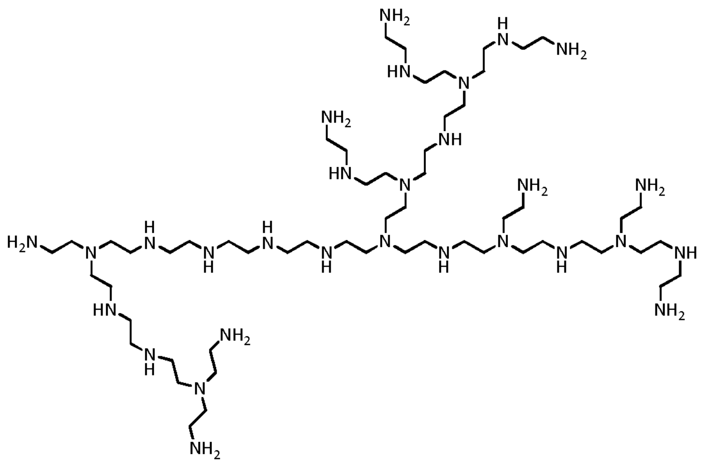

(structure 1)

An unsubstituted PEI (structure 1) containing 29 nitrogen atoms of which 9 are primary (i.e. $NH_2$), 13 are secondary (i.e. NH) and 7 are tertiary, is reacted with 26 mol equivalents of propylene oxide to give the structure below (structure 2).

The unsubstituted initial PEI (structure 1) contained (2x9) + (1x13) = 31 protons of the primary and secondary nitrogens. When reacted with 26 mol equivalents of propylene oxide, 26/31 x 100 = 83.9 mol% of the protons of the primary and secondary nitrogens have been replaced by an iso-propyl alcohol groups (structure 2).

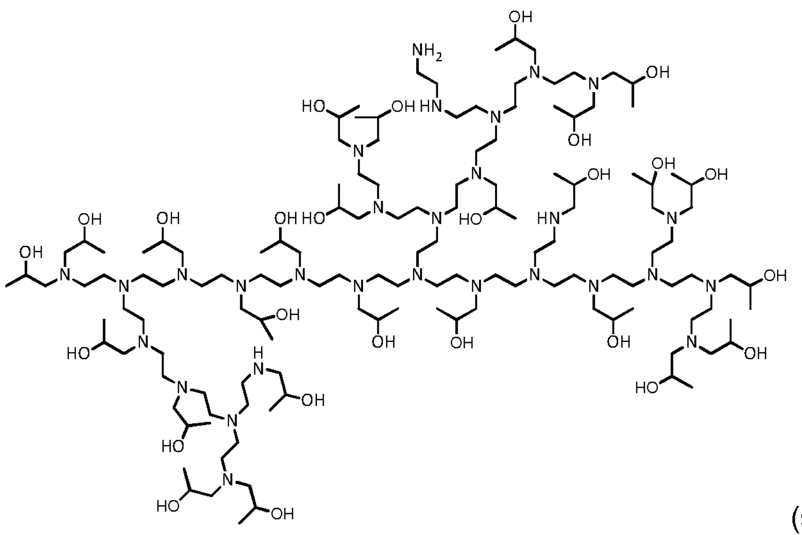

(structure 2)

The propoxylated PEI (Structure 2) is then reacted with 1 mol equivalent of

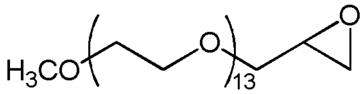

To produce a propoxylated PEI with an ethoxylate chain (structure 3).

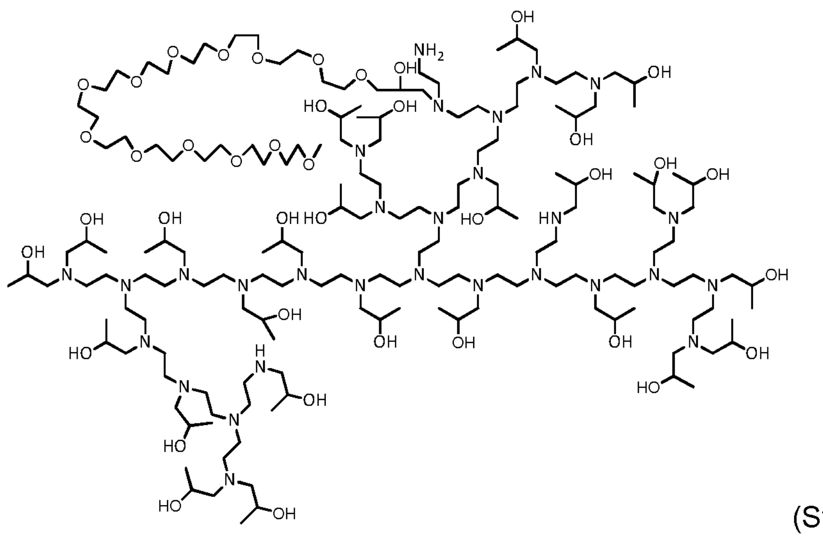

(Structure 3)

The propoxylated PEI with an ethoxylate chain (structure 3) is reacted with 1mol equivalent of Reactive Blue 49 to produce the dye-polymer of the invention (structure 4).

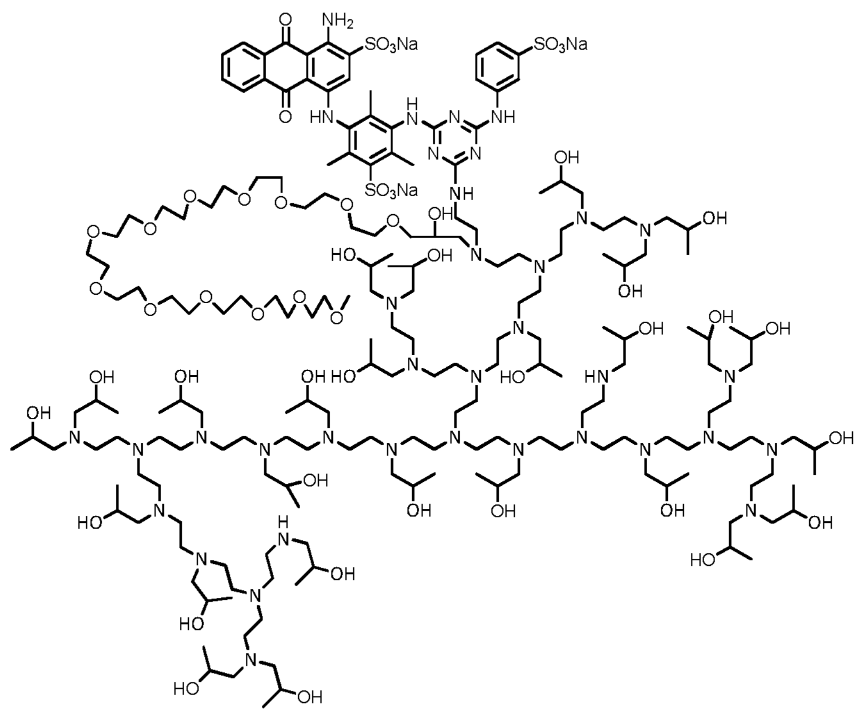

(Structure 4).

In above structure the illustrated the propoxylated PEI carries one dye chromophore. The dye polymers can carry a plurality of reactive dye.

The reactive group of the reactive dye preferably reacts with an NH group of the propoxylated PEI.

Preferably the dye-polymer contains 1 to 45wt% of dye. In structure 4 the molecular weight of the dye polymer is 4195.4 of which 846.7 is the dye, the wt% of dye on the dye-polymer is 846.7/4195.4 x 100 = 20.18 wt%.

When the polyethylene imine has from from 10 to 200, most preferably from 15 to 45, amine nitrogen atoms, the mole ratio of reactive dye to polymer is from 0.2:1 to 1:1.

A further example of a dye polymer of the invention is:

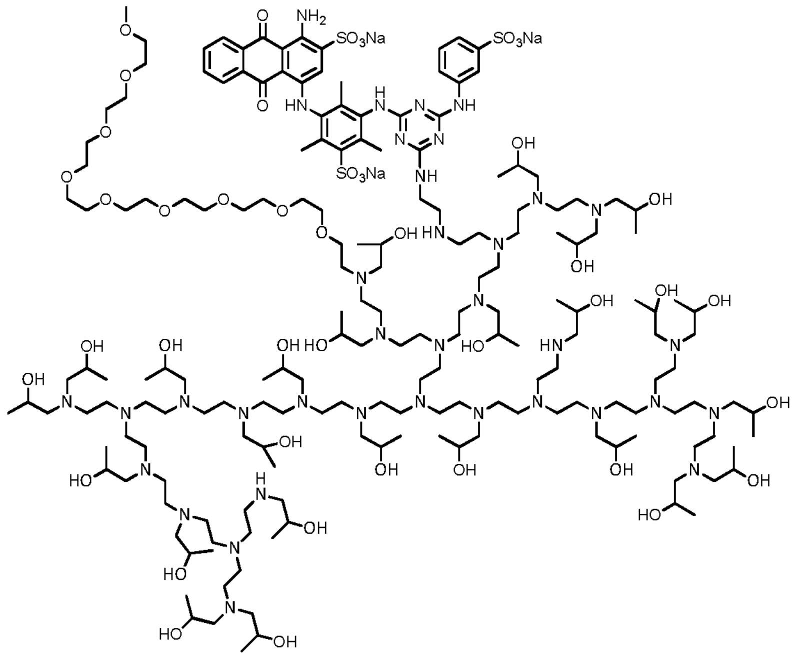

Preferably the mole ratio of reactive dye to polymer is from 0.2:1 to 1:1. Reactive dyes with 2 reactive groups may cross-link the polymer, so that it is attached to 2 polymer chains. Preferably the reactive dye is only attached to one polymer.

Surfactant

The laundry composition comprises from 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO, preferably 7EO to 9EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric

conditioner.

Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

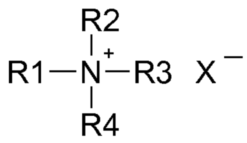

in which $R^1$ is a $C_{12}$ to $C_{22}$ alkyl or alkenyl chain; $R^2$, $R^3$ and $R^4$ are independently selected from $C_1$ to $C_4$ alkyl chains and X- is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and X- is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Procter and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3\text{-}\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and

OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

Enzymes

One or more enzymes are preferred present in a laundry composition of the invention and when practicing a method of the invention.

Preferably the level of each enzyme in the laundry composition of the invention is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens*, *Pseudomonas* sp. strain SD 705 (WO 95/06720 and WO 96/27002), *P. wiscon-*

*sinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and lipoclean™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes

A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola*, *Fusarium, Thielavia, Acremonium,* e.g. the fungal cellulases produced from *Humicola insolens*, *Thielavia terrestris, Myceliophthora thermophila,* and *Fusarium oxysporum* disclosed in US 4,435,307, US 5,648,263,
US 5,691,178, US 5,776,757, WO 89/09259, WO 96/029397, and WO 98/012307. Commercially available cellulases include Celluzyme™, Carezyme™, Celluclean™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from C. *cinereus*, and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

<u>Enzyme Stabilizers</u>

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Dye weights refer to the sodium or chloride salts unless otherwise stated.

Preferably the laundry treatment composition is in a plastic bag, plastic box or a cardboard box.

For ease of use it is preferred that the laundry treatment composition is present in 0.5 to 5kg packs.

The composition is preferably a liquid detergent. The liquid detergent may be contained within a unit dose, for example 20ml of liquid contained within a polyvinyl alcohol film. Within liquid detergents the dye-polymers have the additional advantage of showing low staining to fabric on neat contact of the liquid with fabric.

Preferably the pH of the composition when dissolved in water at 2g/L is in the range 7 to 9.

Domestic wash conditions include, hand washing clothes in water at temperatures of 278 to 335K, preferably 283K to 305K and machine washing in front loading or top loading washing machine at water temperatures of from 278 to 368, preferably 283 to 335K.

## Examples

### Example 1

A 50wt% aqueous solution of a branched PEI core (pH~11) with an average molecular weight of 1300, containing an average of 12 primary, 11 secondary 8 tertiary nitrogen per PEI, was reacted with propylene oxide (PO) in a range of mole ratio's. After the initial exotherm had subsided (~45°C) the mixture was stirred at 20°C for 3 hr followed by heating at 45°C for 30 min. After cooling to 20°C 1 mol equivalent of Tosyl $(CH_2CH_2O)_{12}CH_3$ was added to provide the an ethoxylate chain and the mixture stirred at 20°C for 24 hr. Following reaction the reactive blue dye was added (Reactive Blue 261, Reactive Blue 171, Reactive Blue 19) and the mix heated at 60°C for 2 hours. The reaction mixture was then cooled and the pH adjusted to 7 with HCl.

The procedure was then repeated, with the exclusion of the Tosyl $(CH_2CH_2O)_{12}CH_3$ step.

The procedure was repeated with the exclusion of the propylene oxide step, but with the addition of 1 or 20 mol equivalent of Tosyl $(CH_2CH_2O)_{12}CH_3$.

### Example 2

The following liquid composition was made.

| | Weight% |
|---|---|
| Linear alkyl benzene sulfonic acid | 8.4 |
| Alcohol ethoxylate (C12-C15 primary alcohol with 7 moles of ethoxylate (EO)) | 2.1 |
| Sodium lauryl ether sulphate(3EO) | 10.5 |
| 1,2-propanediol | 2 |
| Citric acid | 0.5 |
| Perfume | 0.3 |
| NaOH | To pH=8.4 |
| Water | remainder |

The compositions were used to wash a mixture of white fabrics: woven cotton, micro-fibre polyester, and knitted nylon-elastane at a Liquor to cloth ratio of 30:1 in a tergotometer. The fabrics were of equal area. 26° French hard water was used and each wash lasted 30 minutes and was followed by a running rinse. The compositions were all used at 2.3g/L. The Reactive Blue 171 polymers of example 1 were added to the wash liquor to provide a concentration of 20 ppm.

The white clothes were removed, dried and the colour measured using a relflectometer and expressed as the CIE L*a*b* values. The bluing (whiteness) of the dye-polymer was expressed as the Δb value

$$\Delta b = b(\text{control}) - b\ (\text{dye polymer}).$$

The results given in the table below:

| | Benefit Δb | |
|---|---|---|
| | cotton | polyester |
| **R1:** Reference ethoxylated polymer of WO2011/047987 | 1.33 | 0.25 |
| **R2:** Reference ethoxylated polymer of WO2012/119859 | 0.58 | 0.19 |
| **Inv1:** Inventive propoxylated-ethoxylated polymer | 2.52 | 1.42 |
| **R1** is a PEI(Mw=1300) with 15wt% Reactive Blue 171 covalently bound to it and one $(CH_2CH_2O)_{12}CH_3$ ethoxylate chain, as described in WO2011/047987<br>**R2** is a PEI(Mw=1300) with 15wt% Reactive Blue 171 covalently bound to it and twenty $(CH_2CH_2O)_{12}CH_3$ ethoxylate chains, as described in WO2012/119859.<br>**Inv1:** is a PEI(Mw=1300) with 15wt% Reactive Blue 171 covalently bound to it, 30 moles of $CH_2CH(OH)CH_3$ and one $(CH_2CH_2O)_{12}CH_3$ ethoxylate chain. | | |

The formulations were remade with the addition of the enzyme containing products: 0.1wt% Celluclean, 0.1wt% Savinase Ultra, 0.1wt% Stainzyme plus and 0.1wt% Lipoclean (Novozymes A/S).

The polymer of the present application exhibit improved deposition to textiles indicated by a higher deltab value; hence a better whitening benefit is provided.

## Claims

1. A dye polymer comprising a polyethylene imine covalently bound to a reactive dye, the polyethylene imine having from 7 to 1000000 amine nitrogen atoms, wherein from 20 to 95 mol% of the totality of the protons of the primary and secondary amine nitrogen atoms of the unsubstituted polyethylene imine are substituted by iso-propyl alcohol groups and from 3 to 15 mol % of the protons of the primary and secondary amine nitrogens have been replaced by a polyalkoxyl chain selected from: ethoxy; and, propoxy, wherein the polyalkoxyl chain has from 3 to 50 repeating alkoxyl monomer units.

2. A dye polymer according to claim 1, wherein the dye polymer is a blue or violet dye polymer.

3. A dye polymer according to claim 1 or 2, wherein the polyethylene imine contains from 15 to 45 amine nitrogen atoms.

4. A dye polymer according to any one of the preceding claims, wherein 57 to 80 mol% of the protons of the primary and secondary amine nitrogen atoms are substituted by iso-propyl alcohol groups.

5. A dye polymer according to any one of the preceding claims, wherein the reactive group of the reactive dye is selected from heterocyclic reactive groups; 2-bromoprop-2-enamido; 2,3-dibromopropanamido; and, a sulfooxyethylsulfonyl reactive group ($-SO_2CH_2CH_2OSO_3Na$).

6. A dye polymer according to any one of the preceding claims, wherein the chromphore of the reactive dye is selected from; mono-azo; bis-azo; and, anthraquinone.

7. A dye polymer according to claims 6, wherein the chromphore of the reactive dye is anthraquinone.

8. A dye polymer according to claim 7, wherein the reactive dye is an anthraquinone dye of the form:

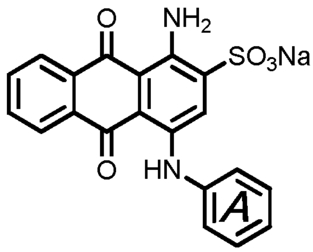

,

wherein the A ring is substituted by a reactive group selected from: dichlorotriazinyl; difluorochloropyrimidine; monofluorotrazinyl; monofluorochlorotrazinyl; dichloroquinoxaline; difluorotriazine; monochlorotriazinyl; trichloropyrimidine 2-bromoprop-2-enamido; 2,3-dibromopropanamido; and, a sulfooxyethylsulfonyl reactive group ($-SO_2CH_2CH_2OSO_3Na$).

**9.** A dye polymer according to claim 8, wherein the A ring is substituted by one or more organic groups selected from: C1-C8-alkyl; and, $SO_3Na$.

**10.** A dye polymer according to claim 1, wherein the anthraquinone dye is selected from:

Reactive blue 1; Reactive blue 2; Reactive blue 4; reactive blue 5; Reactive blue 6; Reactive blue 12; Reactive blue 16; reactive blue 19; Reactive blue 24 ; Reactive blue 27; Reactive blue 29; Reactive blue 36; Reactive blue 44; Reactive blue 46 ; Reactive blue 47; reactive blue 49; Reactive blue 50; Reactive blue 53; Reactive blue 55; Reactive blue 61; Reactive blue 66; Reactive blue 68; Reactive blue 69; Reactive blue 74; Reactive blue 86; Reactive blue 93; Reactive blue 94; Reactive blue101; Reactive blue103; Reactive blue114; Reactive blue117; Reactive blue125; Reactive blue141; Reactive blue142; Reactive blue 145; Reactive blue 149; Reactive blue 155; Reactive blue 164; Reactive blue 166; Reactive blue 177; Reactive blue 181; Reactive blue 185; Reactive blue 188; Reactive blue 189; Reactive blue 206; Reactive blue 208; Reactive blue 246; Reactive blue 247; Reactive blue 258; Reactive blue 261 Reactive blue 262; Reactive blue 263; Reactive blue 172; Reactive Violet 22; Reactive Violet 31; and, Reactive Violet 34.

**11.** A laundry composition comprising from 0.001 to 2.0 wt% of the dye polymer as defined any one of the preceding claims and from 2 to 70 wt% of surfactant.

**12.** A domestic method of treating a textile, the method comprising the steps of:

(i) treating a textile with an aqueous solution of the dye polymer as defined in any one of claims 1 to 10, the aqueous solution comprising from 10 ppb to 5000 ppm of the dye polymer; and, from 0.0 g/L to 6 g/L of a surfactant; and,
(ii) optionally rinsing and drying the textile.

**13.** A domestic method of treating a textile according to claim 12, wherein the aqueous solution comprises from 0.2 to 4 g/L of a surfactant.

**14.** A domestic method of treating a textile according to claim 12 or 13, wherein the aqueous solution comprises a fluorescer in the range from 0.0001 g/l to 0.1 g/l

## Patentansprüche

**1.** Farbstoffpolymer, das ein an einem reaktiven Farbstoff kovalent gebundenes Polyethylenimin umfasst, wobei das Polyethylenimin 7 bis 1000000 Aminstickstoffatome aufweist, wobei 20 bis 95 Mol-% der Gesamtheit der Protonen der primären und sekundären Aminstickstoffatome des unsubstituierten Polyethylenimins durch Iso-Propylalkohol-Gruppen substituiert sind und 3 bis 15 Mol-% der Protonen der primären und sekundären Aminstickstoffatome durch eine Polyalkoxylkette, die unter Ethoxy und Propoxy ausgewählt ist, ersetzt sind, wobei die Polyalkoxylkette 3 bis 50 Alkoxylmonomer-Wiederholungseinheiten aufweist.

**2.** Farbstoffpolymer nach Anspruch 1, wobei das Farbstoffpolymer ein blaues oder violettes Farbstoffpolymer darstellt.

**3.** Farbstoffpolymer nach Anspruch 1 oder 2, wobei das Polyethylenimin 15 bis 45 Aminstickstoffatome enthält.

**4.** Farbstoffpolymer nach irgendeinem der vorhergehenden Ansprüche, wobei 57 bis 80 Mol-% der Protonen der primären und sekundären Aminstickstoffatome durch Iso-Propylalkohol-Gruppen substituiert sind.

**5.** Farbstoffpolymer nach irgendeinem der vorhergehenden Ansprüche, wobei die reaktive Gruppe des reaktiven Farbstoffs unter reaktiven heterocyclischen Gruppen, 2-Bromprop-2-enamido-, 2,3-Dibrompropanamido- und einer reaktiven Sulfooxyethylsulfonyl-Gruppe ($-SO_2CH_2CH_2OSO_3Na$) ausgewählt ist.

6. Farbstoffpolymer nach irgendeinem der vorhergehenden Ansprüche, wobei der Chromophor des reaktiven Farbstoffs unter Monoazo, Bisazo und Anthrachinon ausgewählt ist.

7. Farbstoffpolymer nach Anspruch 6, wobei der Chromophor des reaktiven Farbstoffs Anthrachinon ist.

8. Farbstoffpolymer nach Anspruch 7, wobei der reaktive Farbstoff ein Anthrachinonfarbstoff in Form von

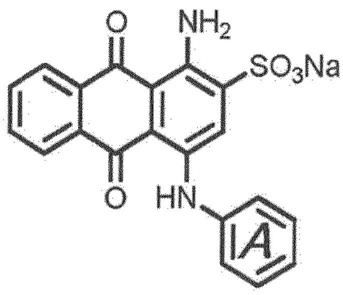

ist,
worin der Ring A durch eine reaktive Gruppe substituiert ist, die unter Dichlortriazinyl, Difluorchlorpyrimidin, Monofluortrazinyl, Monofluorchlortrazinyl, Dichlorchinoxalin, Difluortriazin, Monochlortriazinyl, Trichlorpyrimidin, 2-Bromprop-2-enamido, 2,3-Dibrompropanamido und einer reaktiven Sulfooxyethylsulfonyl-Gruppe ($-SO_2CH_2CH_2OSO_3Na$) ausgewählt ist.

9. Farbstoffpolymer nach Anspruch 8, wobei der Ring A durch eine oder mehrere organische Gruppen substituiert ist, die unter C1-C8-Alkyl und $SO_3Na$ ausgewählt sind.

10. Farbstoffpolymer nach Anspruch 1, wobei der Anthrachinonfarbstoff ausgewählt ist unter: Reactive blue 1, Reactive blue 2, Reactive blue 4, Reactive blue 5, Reactive blue 6, Reactive blue 12, Reactive blue 16, Reactive blue 19, Reactive blue 24, Reactive blue 27, Reactive blue 29, Reactive blue 36, Reactive blue 44, Reactive blue 46, Reactive blue 47, Reactive blue 49, Reactive blue 50, Reactive blue 53, Reactive blue 55, Reactive blue 61, Reactive blue 66, Reactive blue 68, Reactive blue 69, Reactive blue 74, Reactive blue 86, Reactive blue 93, Reactive blue 94, Reactive blue 101, Reactive blue 103, Reactive blue 114, Reactive blue 117, Reactive blue 125, Reactive blue 141, Reactive blue 142, Reactive blue 145, Reactive blue 149, Reactive blue 155, Reactive blue 164, Reactive blue 166, Reactive blue 177, Reactive blue 181, Reactive blue 185, Reactive blue 188, Reactive blue 189, Reactive blue 206, Reactive blue 208, Reactive blue 246, Reactive blue 247, Reactive blue 258, Reactive blue 261, Reactive blue 262, Reactive blue 263, Reactive blue 172, Reactive Violet 22, Reactive Violet 31 und Reactive Violet 34.

11. Waschzusammensetzung, die 0,001 bis 2,0 Gew.-% des Farbstoffpolymers, das in irgendeinem der vorhergehenden Ansprüche definiert ist, und 2 bis 70 Gew.-% Tensid umfasst.

12. Häusliches Verfahren zur Behandlung eines Textils, wobei das Verfahren die Schritte umfasst:

(i) Behandeln eines Textils mit einer wässrigen Lösung des Farbstoffpolymers, wie in irgendeinem der Ansprüche 1 bis 10 definiert, wobei die wässrige Lösung 10 ppb bis 5000 ppm des Farbstoffpolymers und 0,0 g/l bis 6 g/l eines Tensids umfasst und
(ii) gegebenenfalls Spülen und Trocknen des Textils.

13. Häusliches Verfahren zur Behandlung eines Textils nach Anspruch 12, wobei die wässrige Lösung 0,2 bis 4 g/l eines Tensids umfasst.

14. Häusliches Verfahren zur Behandlung eines Textils nach Anspruch 12 oder 13, wobei die wässrige Lösung ein fluoreszierendes Mittel in dem Bereich von 0,0001 g/l bis 0,1 g/l umfasst.

**Revendications**

1. Polymère de colorant comprenant une polyéthylèneimine liée de manière covalente à un colorant réactif, la polyéthylèneimine ayant de 7 à 1 000 000 d'atomes azote d'amine, où de 20 à 95 % en mol de tous les protons des atomes azote d'amines primaires et secondaires de la polyéthylèneimine non substitués sont substitués par des groupes alcool iso-propylique et de 3 à 15 % en mol des protons des azotes d'amines primaires et secondaires ont été remplacés par une chaîne polyalcoxyle choisie parmi : éthoxy ; et, propoxy, où la chaîne polyalcoxyle présente de 3 à 50 unités monomères alcoxyle répétitives.

2. Polymère de colorant selon la revendication 1, où le polymère de colorant est un polymère de colorant bleu ou violet.

3. Polymère de colorant selon la revendication 1 ou 2, où la polyéthylèneimine contient de 15 à 45 atomes azote d'amine.

4. Polymère de colorant selon l'une quelconque des revendications précédentes, où de 57 à 80 % en mol des protons des atomes azote d'amines primaires et secondaires sont substitués par des groupes alcool iso-propylique.

5. Polymère de colorant selon l'une quelconque des revendications précédentes, où le groupe réactif du colorant réactif est choisi parmi des groupes réactifs hétérocycliques ; 2-bromoprop-2-énamido ; 2-3-dibromopropanamido ; et, un groupe réactif sulfooxyéthylsulfonyle ($-SO_2CH_2CH_2OSO_3Na$).

6. Polymère de colorant selon l'une quelconque des revendications précédentes, où le chromophore du colorant réactif est choisi parmi ; mono-azo ; bis-azo ; et, anthraquinone.

7. Polymère de colorant selon la revendication 6, où le chromophore du colorant réactif est l'anthraquinone.

8. Polymère de colorant selon la revendication 7, où le colorant réactif est un colorant d'anthraquinone de la forme :

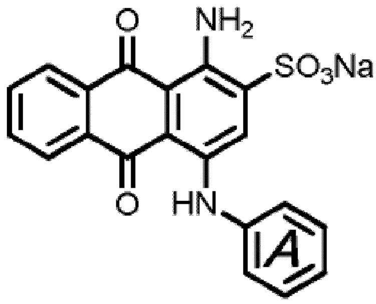

,

où le noyau A est substitué par un groupe réactif choisi parmi : dichlorotriazinyle, difluorochloropyrimidine ; monofluorotrazinyle, monofluorochlorotrazinyle ; dichloroquinoxaline ; difluorotriazine ; monochlorotriazinyle ; trichloropyrimidine 2-bromoprop-2-énamido ; 2,3-dibromopropanamido ; et, un groupe réactif sulfooxyéthylsulfonyle ($-SO_2CH_2CH_2OSO_3Na$).

9. Polymère de colorant selon la revendication 8, où le noyau A est substitué par un ou plusieurs groupes organiques choisis parmi : un groupe alkyle en C1-C8 ; et, $SO_3Na$.

10. Polymère de colorant selon la revendication 1, où le colorant d'anthraquinone est choisi parmi : bleu réactif 1 ; bleu réactif 2 ; bleu réactif 4 ; bleu réactif 5 ; bleu réactif 6 ; bleu réactif 12 ; bleu réactif 16 ; bleu réactif 19 ; bleu réactif 24 ; bleu réactif 27 ; bleu réactif 29 ; bleu réactif 36 ; bleu réactif 44 ; bleu réactif 46 ; bleu réactif 47 ; bleu réactif 49 ; bleu réactif 50 ; bleu réactif 53 ; bleu réactif 55 ; bleu réactif 61 ; bleu réactif 66 ; bleu réactif 68 ; bleu réactif 69 ; bleu réactif 74 ; bleu réactif 86 ; bleu réactif 93 ; bleu réactif 94 ; bleu réactif 101 ; bleu réactif 103 ; bleu réactif 114 ; bleu réactif 117 ; bleu réactif 125 ; bleu réactif 141 ; bleu réactif 142 ; bleu réactif 145 ; bleu réactif 149 ; bleu réactif 155 ; bleu réactif 164 ; bleu réactif 166 ; bleu réactif 177 ; bleu réactif 181 ; bleu réactif 185 ; bleu réactif 188 ; bleu réactif 189 ; bleu réactif 206 ; bleu réactif 208 ; bleu réactif 246 ; bleu réactif 247 ; bleu réactif 258 ; bleu réactif 261 ; bleu réactif 262 ; bleu réactif 263 ; bleu réactif 172 ; violet réactif 22 ; violet réactif 31 ; et, violet réactif 34.

11. Composition de lessive comprenant de 0,001 à 2,0 % en masse du polymère de colorant selon l'une quelconque des revendications précédentes et de 2 à 70 % en masse de tensioactif.

12. Procédé domestique de traitement d'un textile, le procédé comprenant les étapes de :

(i) traitement d'un textile avec une solution aqueuse du polymère de colorant selon l'une quelconque des revendications 1 à 10, la solution aqueuse comprenant de 10 ppb à 5 000 ppm du polymère de colorant ; et, de 0,0 g/l à 6 g/l d'un tensioactif ; et,
(ii) rinçage éventuel et séchage du textile.

**13.** Procédé domestique de traitement d'un textile selon la revendication 12, où la solution aqueuse comprend de 0,2 à 4 g/l d'un tensioactif.

**14.** Procédé domestique de traitement d'un textile selon la revendication 12 ou 13, où la solution aqueuse comprend un fluorescent dans l'intervalle de 0,0001 g/l à 0,1 g/l.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011047987 A
- WO 2012119859 A
- US 5565145 A
- EP 328177 A
- EP 070074 A
- EP 346995 A
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- CTFA (Cosmetic, Toiletry and Fragrance Association). International Buyers Guide. CFTA Publications, 1992
- OPD 1993 Chemicals Buyers Directory. Schnell Publishing Co
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360